# EUROPEAN PATENT APPLICATION

(11) **EP 1 480 403 A1**
(43) Date of publication of application: **24.11.2004**
(21) Application number: 03705376.6
(22) Date of filing: 21.02.2003
(51) Int. Cl.: H04L 27/38

(54) **DEMODULATING APPARATUS AND DEMODULATING METHOD**

(30) Priority: 26.02.2002 JP 2002050002
(71) Applicant: MATSUSHITA ELECTRIC INDUSTRIAL CO., LTD., Kadoma-shi, Osaka 571-8501 (JP)
(72) Inventor: NISHIO, Akihiko, Yokosuka-shi, Kanagawa 239-0846 (JP)
(74) Representative: Grünecker, Kinkeldey, Stockmair & Schwanhäusser Anwaltssozietät
(86) International application number: PCT/JP2003/001896
(87) International publication number: WO 2003/073718

(57) **Abstract**

A signal received in an antenna (101) is input to a symbol dividing section (107) via a radio reception section (102), delay profile generating section (104), Rake combining section (105), and JD computation section (106), is divided every a predetermined number of symbols, and is output to a soft decision value calculating section (110) and symbol averaging section (108). The symbol averaging section (108) obtains average amplitude of divided received signals. A reference signal point setting section (109) sets reference signal points based on the average amplitude. The soft decision value calculating section (110) makes a soft decision on the received signal output from the symbol dividing section (107), using the reference signal points set in reference signal point setting section (109). It is thereby possible to improve the accuracy in average amplitude of received signal points and to improve the demodulation accuracy.

## Description

### Technical Field

The present invention relates to a demodulation apparatus and demodulation method applied to a communication terminal apparatus and base station apparatus in a radio communication system.

### Background Art

Recently, as a modulation scheme in digital radio communications that cope with increased communication needs, amplitude modulation that provides the amplitude with information has been implemented such as M-ary Quadrature Amplitude Modulation (M-ary QAM).

In the M-ary Quadrature Amplitude Modulation, for example, in 16QAM, in order to demodulate modulated signals, it is required to bring a scale of amplitude of a received signal point into coincidence with a scale of amplitude of a reference signal point that is a reference in demodulation. The processing is generally called amplitude variation compensation.

Specifically, average amplitude of received signal points and average amplitude of reference signal points is obtained, ratio a (=the average amplitude of received signal points/the average amplitude of reference signal points) is calculated, and α is multiplied by each of the reference signal points, thereby performing the amplitude variation compensation.

At this point, it is required to carry out the averaging over symbols for the long term to obtain the average amplitude of received signal points with high accuracy. However, averaging the amplitude for the long term increases a difference between the average amplitude and instantaneous amplitude due to an effect of reception power variation caused by, for example, fading, a significant error thereby occurs between a reception signal point and reference signal point used in demodulation, and there arises a problem that demodulation characteristics of the received signal deteriorate.

Meanwhile, when the number of symbols to average is small, the accuracy in average amplitude deteriorates, and also the problem arises that demodulation characteristics deteriorate.

### Disclosure of Invention

It is an object of the present invention to provide a demodulation apparatus and demodulation method that enable improved accuracy in average amplitude of received signal points and improved demodulation accuracy.

It is a subject matter of the present invention to divide a demodulation interval in M-ary Quadrature Amplitude Modulation corresponding to an amplitude variation in received signal or data amount of the received signal so as to set an averaging interval used in amplitude variation compensation of the received signal at an optimal interval.

### Brief Description of Drawings

FIG.1 is a block diagram showing an example of a configuration of a demodulation apparatus according to a first embodiment of the present invention;
FIG.2 is a view showing reference signal points before and after amplitude variation compensation;
FIG.3 is a view showing changes in demodulation accuracy in a slot in a conventional apparatus;
FIG.4 is a view showing a configuration of a slot of a received signal when dividing number N is four (N=4);
FIG.5 is a graph of demodulation accuracy when a slot is divided into N intervals;
FIG.6 is a block diagram showing an example of a configuration of a demodulation apparatus according to a second embodiment of the present invention;
FIG.7 is a block diagram showing an example of a configuration of a demodulation apparatus according to a third embodiment of the present invention;
FIG.8 is a block diagram showing an example of a configuration of a demodulation apparatus according to a fourth embodiment of the present invention; and
FIG.9 is a block diagram showing an example of a configuration of demodulation apparatus according to a fifth embodiment of the present invention.

### Best Mode for Carrying Out the Invention

Embodiments of the present invention will be described specifically below with reference to accompanying drawings. Herein, descriptions are given using as an example a case where an IMT2000-TDD (International Mobile Telecommunications 2000 Time Division Duplex) system is used in a HSDPA (High Speed Downlink Packet Access) specified in 3GPP (3rd Generation Partnership Project) TR25.848 v4.0.0(2001-03), and a signal modulated in 16QAM is demodulated.

### (First embodiment)

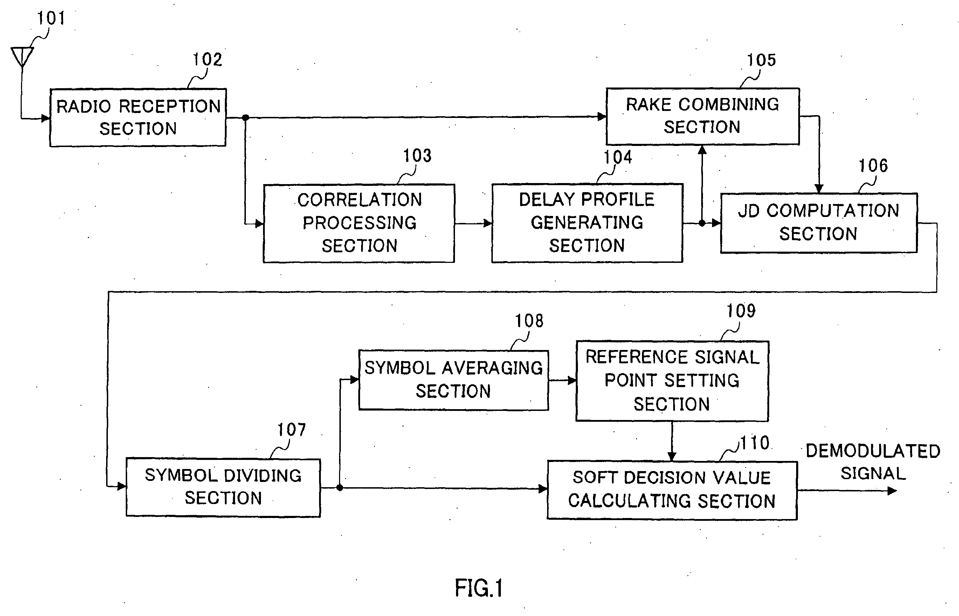

FIG.1 is a block diagram showing an example of a configuration of a demodulation apparatus according to the first embodiment of the present invention.

The radio communication apparatus has antenna 101, radio reception section 102, correlation processing section 103, delay profile generating section 104, Rake combining section 105, JD computation section 106, symbol dividing section 107, symbol averaging section 108, reference signal point setting section 109 and soft decision value calculating section 110.

Radio reception section 102 performs predetermined radio processing such as down converting on a signal received in antenna 101. Correlation processing section 103 performs correlation calculations between a pilot signal portion called midamble contained in a received signal output from radio reception section 102 and a known midamble sequence to output to delay profile generating section 104. Delay profile generating section 104 generates a delay profile of the signal output from correlation processing section 103 to output to Rake combining section 105. Using the delay profile, Rake combining section 105 performs despreading and Rake combining on the received signal to output to JD computation section 106. Based on the received signal subjected to Rake combining in Rake combining section 105 and the delay profile generated in delay profile generating section 104, JD computation section 106 performs JD computation processing on the received signal over a single time slot to output to symbol dividing section 107. Herein, the JD computation is of a computation method as described in Japanese Patent Application 2001-156625, for example.

Symbol dividing section 107 divides the received signal output from JD computation section 106 into beforehand set intervals to output to soft decision value calculating section 110 and symbol averaging section 108.

Symbol averaging section 108 averages divided received signals output from symbol dividing section 107 to obtain average amplitude of the received signals, and outputs the average amplitude to reference signal point setting section 109.

Based on the average amplitude of the received signals output from symbol averaging section 108, reference signal point setting section 109 sets reference signals used in demodulation to output to soft decision value calculating section 110.

Specifically, the section 109 calculates α (=average amplitude of received signals/average amplitude of reference signals) that is a ratio of average amplitude of received signals to average amplitude of beforehand set reference signals, and multiplies α by each of reference signal points to set final reference signal points.

Soft decision value calculating section 110 makes a soft decision on received signals output from symbol dividing section 107, using the reference signal points set in reference signal point setting section 109. The calculated soft decision value is output as a demodulated signal.

The principle of the demodulation scheme as described above will be described below.

When a signal modulated in M-ary modulation such as 16QAM is demodulated, data decision is made by comparing a received signal point with reference signal points. In the decision, it is required to equalize in scale the received signal point and reference signal points. In other words, in order to perform more accurate demodulation, it is required to compensate for amplitude variations occurring in a received signal due to effects of fading, for example, on propagation paths.

In a FDD (Frequency Division Duplex) system, a common pilot signal is used, and reception power of the common pilot signal is used in amplitude variation compensation. However, in the TDD system, a midamble portion containing a pilot signal is not always the same in scale as a received symbol, and further, a signal subjected to JD computation processing does not always have the same reception power as that obtained from the midamble portion. Therefore, it is not possible to perform amplitude variation compensation using a pilot signal.

Accordingly, it is necessary to determine a scale of amplitude of reference signals that are references in demodulation. Hence, in the present invention, average amplitude of received symbols of a data portion is used.

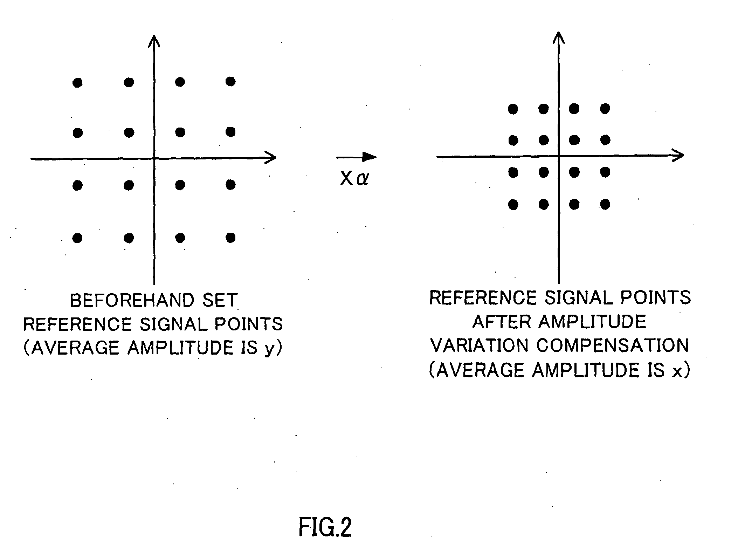

As shown in FIG.2, average amplitude of received symbols over a single slot is assumed to be X, average amplitude of beforehand set sixteen reference signal points is assumed to be y, and each of the beforehand set reference signals points is multiplied by x/y (=α), thereby equalizing scales of received signal points and reference signal points. Then, decision on a QAM symbol point is made by comparing the received symbol subjected to JD computation processing to the reference signal points each multiplied by α.

In obtaining the average amplitude of received symbols, in order to improve the accuracy in average value, a sufficient number of symbols should be used. However, performing the averaging for the long term increases a difference between the average amplitude and instantaneous amplitude due to an effect of power variation caused by fading, and a significant error occurs in scale between a received symbol and reference signal points usedin demodulation. As a result, demodulation characteristics deteriorate.

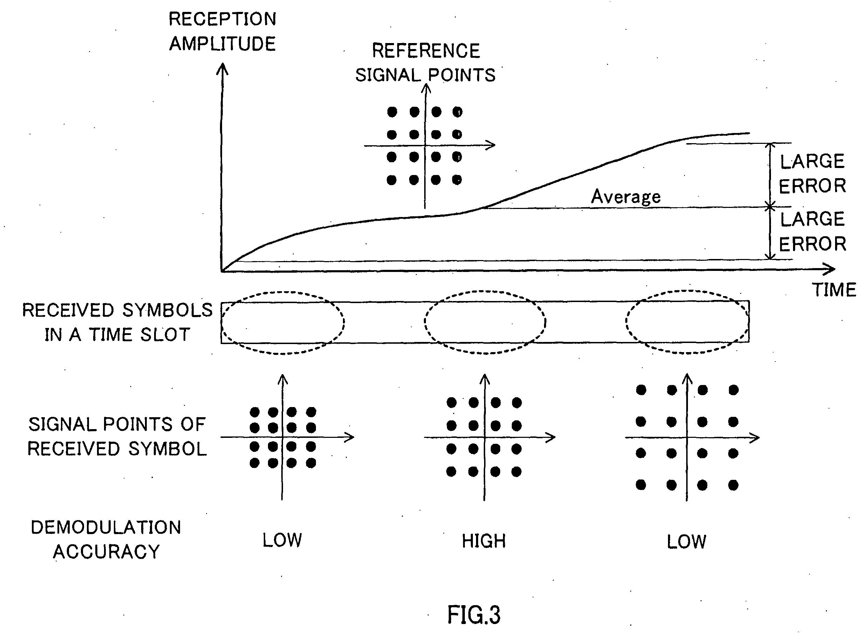

For example, when the amplitude of received signal varies as shown in FIG.3, the demodulation accuracy over a single slot in a conventional apparatus is as described below. In a symbol in a center portion of the slot, since a scale of reference signal points obtained from the average amplitude is almost equal to a scale of signal points of a received symbol, demodulation accuracy is high. Meanwhile, at opposite ends of the slot, since a scale of reference signal points differs from a scale of signal points of a received symbol, demodulation accuracy is low.

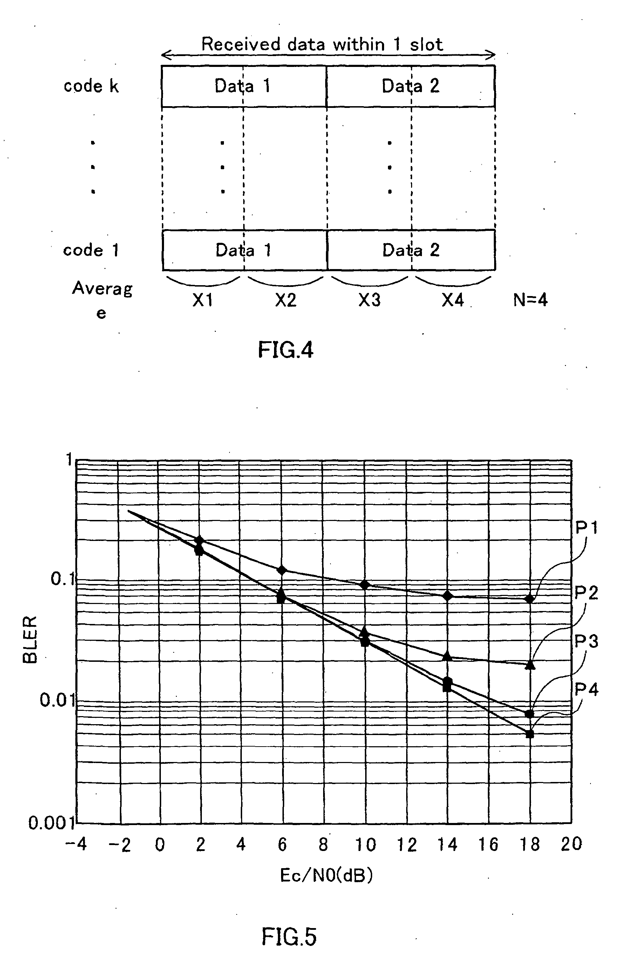

Then, in the present invention, in order for the problem as described above not to occur, a slot is divided into appropriate intervals. FIG.4 shows an example where dividing number N is four (N=4). Data 1 represents a data portion disposed before a midamble portion, and data 2 represents a data portion disposed after the midamble portion.

Using average amplitude values x1 to x4 respectively of divided intervals, reference signal points are set for each of the divided intervals, and the decision is made on a received signal using respective reference signal points. It is thereby possible to prevent deterioration of demodulation accuracy caused by an error in amplitude between reference signal points and received symbol.

FIG.5 is a graph showing a plot of experimentally obtained demodulation accuracy when a slot is divided into N intervals. Plots P1, P2, P3 and P4 represent demodulation accuracy curves for N=1, N=2, N=4 and N=8, respectively.

For example, it is understood that when received signal energy near a noise level (Ec/NO) is large, increased dividing number N remarkably improves BLER (Block Error Rate) representing demodulation accuracy.

Thus, according to this embodiment, a single slot is divided into N intervals, and the amplitude variation compensation is carried out in each of the intervals, whereby it is possible to improve the accuracy in average amplitude of received signal points, and to improve the demodulation accuracy. Further, since the optional processing is only to divide a slot into N intervals, techniques in the present invention can be applied readily to existing mobile communication systems.

### (Second embodiment)

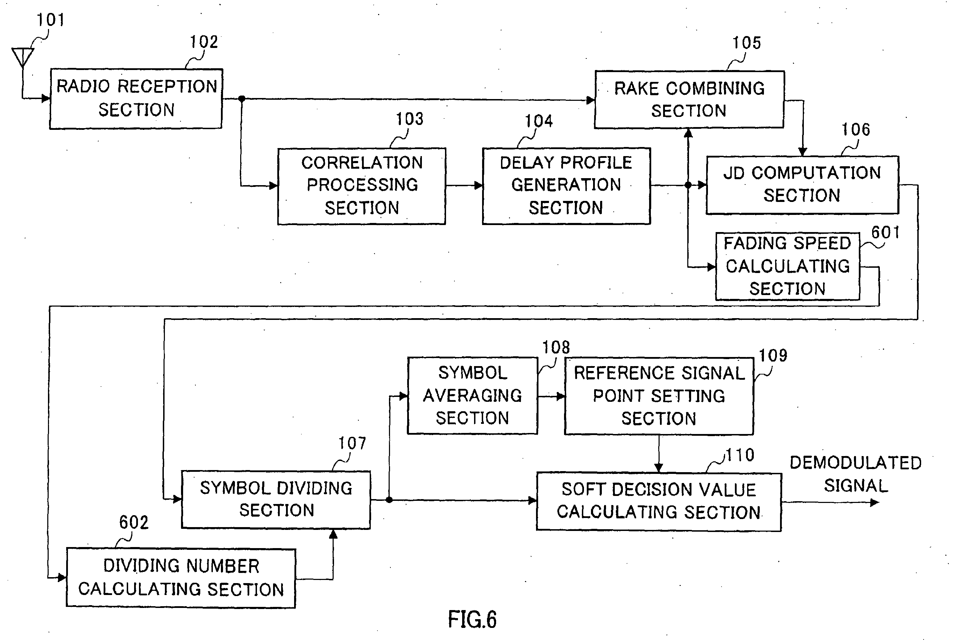

FIG.6 is a block diagram showing an example of a configuration of a demodulation apparatus according to the second embodiment of the present invention. In addition, the demodulation apparatus has basically the same configuration as that of the demodulation apparatus as shown in FIG.1, and the same structural elements are respectively assigned the same reference numerals to omit descriptions thereof.

It is a feature of this embodiment that the apparatus further has fading speed calculating section 601 and dividing number calculating section 602 to determine the dividing number of a slot corresponding to propagation path environments.

Delay profile generating section 104 outputs a generated delay profile to fading speed calculating section 601.

Using delay profiles output from delay profile generating section 104, fading speed calculating section 601 measures total path power Pᵢ in a delay profile of an ith frame and total path power Pᵢ₊₁ in a delay profile of an (i+1)th frame, and obtains difference ΔP (=Pᵢ₊₁-Pᵢ) in reception power between frames. Then, the section 104 calculates fading speed V_{f}(ΔP/ΔT_{frame}) to output to dividing number calculating section 602. Herein, ΔT_{frame} is the duration of a frame [sec].

Dividing number calculating section 602 calculates minimum natural number N that satisfies an equation of (V_{f}× Δ Tₛₗₒₜ/N)<Pₜₕ, where Tₛₗₒₜ is a time length of a data portion (except a pilot portion, i.e., midamble portion) of a transmission unit (slot), and Pₜₕ is a predetermined threshold.

Then, calculated N is set as a dividing number in symbol dividing section 107, and subsequently, the received signal undergoes the same processing as in the first embodiment.

In the above description, a time sequence is divided into time units each called a frame, a frame is divided into time units each called a time slot, and signals are transmitted on a time-slot basis.

Thus, according to this embodiment, since averaging intervals for amplitude variation compensation are set corresponding to fading speed on propagation paths of received signal, it is possible to obtain appropriate average amplitude of received signal even when fading occurs at high speed, and to improve the demodulation accuracy.

### (Third embodiment)

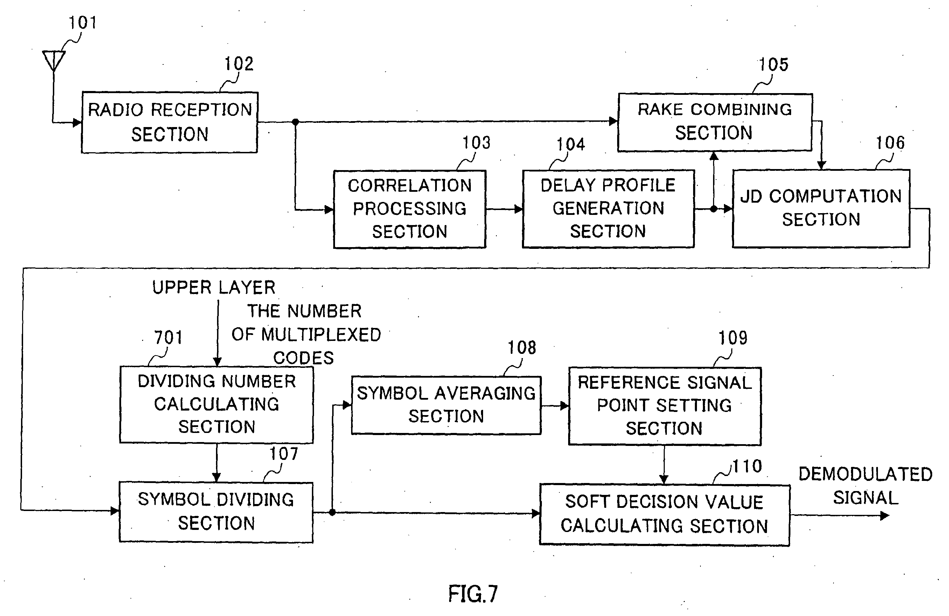

FIG.7 is a block diagram showing an example of a configuration of a demodulation apparatus according to the third embodiment of the present invention. In addition, the demodulation apparatus has basically the same configuration as that of the demodulation apparatus as shown in FIG.1, and the same structural elements are respectively assigned the same reference numerals to omit descriptions thereof.

It is a feature of this embodiment that the apparatus further has dividing number calculating section 701.

Dividing number calculating section 701 calculates maximum integer number N less than or equal to N_{code}/N_{const}, using the number of multiplexed codes, N_{code}, notified from an upper layer. In other words, the section 701 calculates N such that the number of multiplexed codes per divided interval (N_{code}/N) is more than or equal to predetermined constant value N_{const} to output to symbol dividing section 107. For example, when N_{code}/N_{const} = 2.2, N is two (N=2).

Symbol dividing section 107 divides a signal of 1 slot output from JD computation section 106 byN calculated in dividing number calculating section 701.

Thus, according to this embodiment, since averaging intervals for amplitude variation compensation of a received signal are set corresponding to the number of multiplexed codes of the received signal, it is possible to prevent occurrences of the case that a small number of multiplexed codes result in a small number of symbols to average and the averaging is not carried out adequately, and to improve the demodulation accuracy.

### (Fourth embodiment)

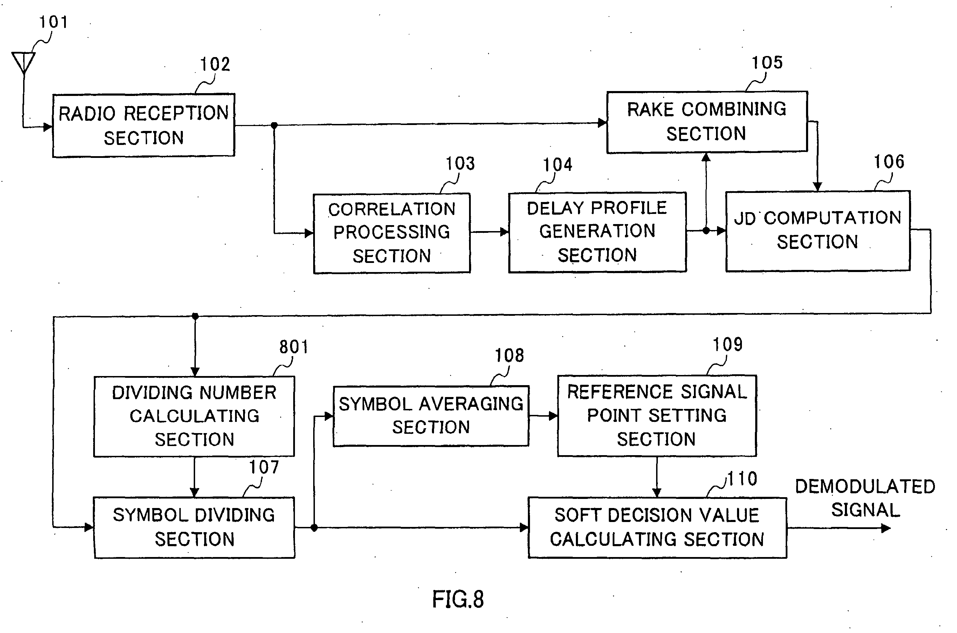

FIG.8 is a block diagram showing an example of a configuration of a demodulation apparatus according to the fourth embodiment of the present invention. In addition, the demodulation apparatus has basically the same configuration as that of the demodulation apparatus as shown in FIG.1, and the same structural elements are respectively assigned the same reference numerals to omit descriptions thereof.

It is a feature of this embodiment that the apparatus has dividing number calculating section 801.

JD computation section 106 outputs a received signal subjected to JD computation to symbol dividing section 107 and dividing number calculating section 801.

Dividing number calculating section 801 calculates N such that the number of symbols divided by N (N_{symbol}/N) does not decrease below the predetermined constant number of symbols, N_{const}, using the number of symbols, N_{symbol}, demodulated in JD computation section 106. In other words, the section 701 calculates maximum integer N less than or equal to N_{symbol}/N_{const} when N_{symbol} is more than N_{const} (N_{symbol}>N_{const}), while setting N at 1 (N=1) when N_{symbol} is less than or equal to N_{const} (N_{symbol}≦N_{const}).

The obtained N is output to symbol dividing section 107, and is used in dividing a signal of 1 slot output from JD computation section 106. It is thereby possible to ensure the number of symbols per averaging interval for amplitude variation compensation of a received signal more than or equal to a predetermined value.

Thus, according to this embodiment, since averaging intervals for amplitude variation compensation of a received signal are set corresponding to the number of symbols of the intervals, it is possible to prevent occurrences of the case that averaging is not carried out adequately due to a small number of symbols to average, and to improve the demodulation accuracy.

### (Fifth embodiment)

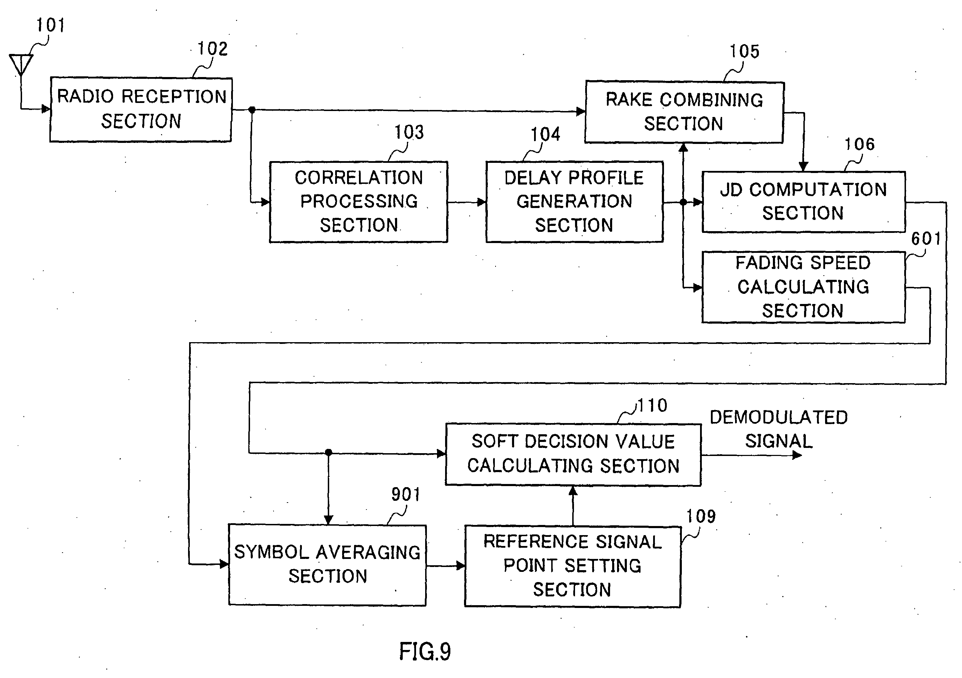

FIG.9 is a block diagram showing an example of a configuration of a demodulation apparatus according to the fifth embodiment of the present invention. In addition, the demodulation apparatus has basically the same configuration as that of the demodulation apparatus as shown in FIG.6, and the same structural elements are respectively assigned the same reference numerals to omit descriptions thereof.

It is a feature of this embodiment that the apparatus has symbol averaging section 901.

Fading speed calculating section 601 outputs calculated fading speed to symbol averaging section 901.

When fading speed V_{f} output from fading speed calculating section 601 is less than or equal to a predetermined value, symbol averaging section 901 obtains an average value of N_{center} symbols in a center portion of a slot of the received signal output from JD computation section 106. Then, with respect to symbols except the N_{center} symbols, the section 901 also outputs the average value obtained for the N_{center} symbols. Accordingly, the average value obtained for the N_{center} symbols is output to reference signal point setting section 109 over the entire averaging intervals.

Thus, according to this embodiment, when fading variations are small on propagation paths, an average value is calculated for part of an averaging interval for amplitude variation compensation, and is used as an average value for the averaging interval, and it is thereby possible to minimize the number of symbols used in averaging, and to suppress power consumption. Further, it is possible to reduce the time required for averaging.

Each of the demodulation apparatuses according to the present invention is capable of being provided in a communication terminal apparatus and base station apparatus using the same system as described above, and it is thereby possible to provide the communication terminal apparatus and base station apparatus with the same advantages as described above.

In addition, descriptions are given using as an example the case where the IMT2000-TDD system is used in the HSDPA (High Speed Downlink Packet Access) based on specifications of 3GPP (3rd Generation Partnership Project) TR25.848 v4.0.0 (2001-03), and asignal modulated in 16QAM is demodulated. However, the present invention is not limited to such a case, and is applicable to systems with the same characteristics as those described above.

As described above, according to the present invention, averaging intervals for amplitude variation compensation of a received signal are varied corresponding to an amplitude variation on propagation paths of the received signal, and it is thereby possible to improve the accuracy in average amplitude of received signal points, and to improve the demodulation accuracy.

This application is based on the Japanese Patent Application No.2002-050002 filed on February 26, 2002, entire content of which is expressly incorporated by reference herein.

### Industrial Applicability

The present invention is applicable to a demodulation apparatus provided in a communication terminal apparatus and base station apparatus in a radio communication system.

## Claims

1. A demodulation apparatus comprising:
a dividing section that divides a time slot that is a unit for symbol reproduction of a received signal into a plurality of intervals;
a setting section that sets reference signal points that are references used in demodulating the received signal for each of the intervals, using amplitude of a data portion of the received signal in each of the intervals divided; and
a demodulation section that demodulates the received signal in the each of the intervals using the reference signal points set.

2. A demodulation apparatus comprising:
a dividing section that divides a received signal sequence of unit demodulation length corresponding to a variation in amplitude of a received signal;
an averaging section that averages amplitude of each of received signal sequences divided in the dividing section;
a setting section that sets reference signal points in quadrature amplitude demodulation for the received signal using the amplitude averaged in the averaging section; and
a demodulation section that demodulates the each of the received signal sequences using the reference signal points set.

3. The demodulation apparatus according to claim 2, further comprising:
a calculating section that calculates fading speed of a received signal;
wherein the dividing section divides the received signal sequence of unit demodulation length corresponding to the fading speed calculated in the calculating section.

4. A demodulation apparatus comprising:
a dividing section that divides a received signal sequence of unit demodulation length corresponding to a data amount of the received signal;
an averaging section that averages amplitude of each of received signal sequences divided in the dividing section;
a setting section that sets reference signal points in quadrature amplitude demodulation for the received signal using the amplitude averaged in the averaging section; and
a demodulation section that demodulates the each of the received signal sequences using the reference signal points set.

5. The demodulation apparatus according to claim 4, wherein the dividing section divides the received signal sequence of unit demodulation length corresponding to a multiplexing number of the received signal.

6. A demodulation apparatus comprising:
an averaging section that averages amplitude of a received signal sequence in part of an interval of the received signal corresponding to a variation in amplitude of the received signal;
a setting section that sets reference signal points in quadrature amplitude demodulation for the received signal using the amplitude averaged in the averaging section; and
a demodulation section that demodulates the received signal using the reference signal points set.

7. A communication terminal apparatus having the demodulation apparatus according to claim 1.

8. A base station apparatus having the demodulation apparatus according to claim 1.

9. A demodulation method comprising:
a dividing step of dividing a received signal sequence of unit demodulation length corresponding to a variation in amplitude of a received signal;
an averaging step of averaging amplitude of each of received signal sequences divided in the dividing step;
a setting step of setting reference signal points in quadrature amplitude demodulation for the received signal using the amplitude averaged in the averaging step; and
a demodulation step of demodulating the each of the received signal sequences using the reference signal points set.

10. A demodulation program that makes a computer execute:
a dividing step of dividing a received signal sequence of unit demodulation length corresponding to a variation in amplitude of a received signal;
an averaging step of averaging amplitude of each of received signal sequences divided in the dividing step;
a setting step of setting reference signal points in quadrature amplitude demodulation for the received signal using the amplitude averaged in the averaging step; and
a demodulation step of demodulating the each of the received signal sequences using the reference signal points set.
